# EUROPEAN PATENT APPLICATION

(11) **EP 1 023 828 A2**
(43) Date of publication of application: **02.08.2000**
(21) Application number: 00300440.5
(22) Date of filing: 21.01.2000
(51) Int. Cl.: A01K 31/00

(54) **A feeding or breeding sanctuary for wild life or livestock**

(30) Priority: 26.01.1999 GB 9901567
(71) Applicant: Horne, John Henry, Windermere, Cumbria LA23 1PL (GB)
(72) Inventor: Horne, John Henry, Windermere, Cumbria LA23 1PL (GB)
(74) Representative: Barker, Rosemary Anne

(57) **Abstract**

To protect wildlife, such as wild birds, from predators, such as kestrels, cats and squirrels, a mesh enclosure (10) is provided. it is important that two sizes of mesh aperture (14, 16) are provided. These may permit access to two different species or groups of species of different size. Alternatively, particularly in the case of enclosures to surround nesting boxes, the smaller apertures may not allow access, and the larger ones allow access only to one or two selected species. Such an enclosure may also be used underwater for aquatic creatures.

## Description

This invention concerns an enclosure which restricts an area for feeding and/or drinking and/or breeding to particular species of wild life or livestock, birds, mammals and fish which are able to enter and leave freely whilst having protection from predators.

Millions of species of wild life and livestock are killed or injured by natural predators and pets every year whilst feeding or breeding in nest boxes provided by mankind for their survival and benefit.

The present invention seeks to provide an enclosure which specifically restricts larger species and predators from entering to feed or rob the nesting boxes during breeding.

According to the present invention an enclosure providing a feeding or breeding sanctuary for wild life or livestock comprises at least one wall section formed of mesh, at least two different sizes of aperture being provided in the mesh whereby selected species of wild life or livestock may enter the sanctuary, but species of larger size are excluded.

Preferably, the enclosure is in the form of a rectangular cage having at least three sides formed of mesh so that birds or other animals using (i.e. allowed entry to) the enclosure for feeding or breeding purposes have a clear view all around. So long as the enclosure is installed in an open position, away from vegetation, the risk of predators approaching the enclosure and not being readily visible to its users will then be minimised.

The present invention will now be described, by way of example only, with reference to the accompanying drawings in which:
Figure 1 is a perspective view of one embodiment of enclosure according to the present invention;
Figure 2 is a perspective view of a second embodiment of enclosure according to the present invention; and
Figure 2a is an enlarged detail of part of the enclosure of Figure 2.

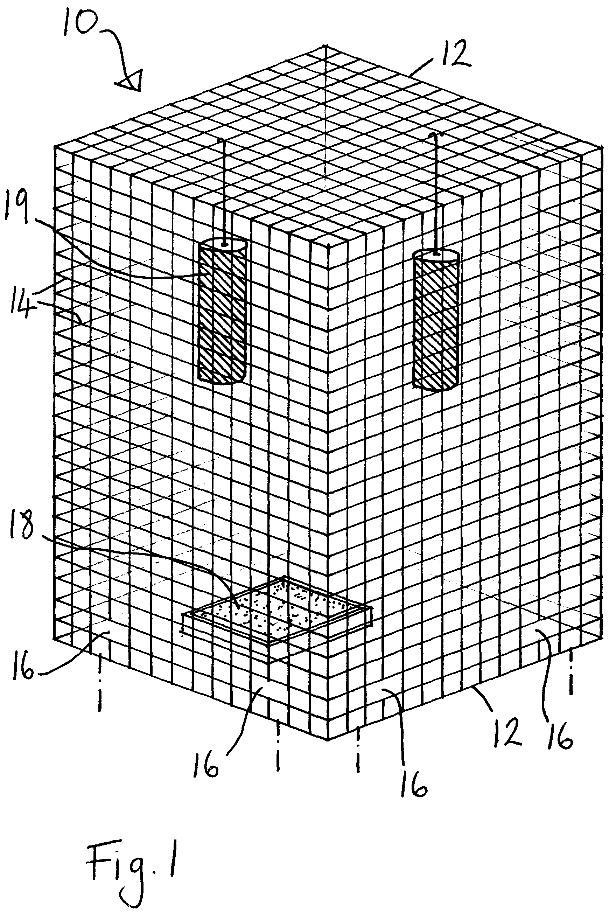

Referring to Figure 1, a first embodiment of enclosure (10) comprises a frame (12) supporting and mounting four rectangular side panels and a top panel, all formed of wire mesh (14) having square apertures. A suitable aperture size is 50mm x 50m. This allows access to the enclosure to birds of a size from wrens up to starlings and great spotted woodpeckers.

The mesh may advantageously be galvanised or plastic coated, or formed entirely of plastics material to minimise rusting and other deterioration. The mesh panels may be mounted onto the frame (12) in any conventional or suitable manner.

The mesh (14) is cut away in a few places near the bottom of the enclosure (10) to provide a few rectangular apertures (16) which are twice the size of the other apertures and have longer sides extending substantially horizontally, i.e 100mm x 50mm. These rectangular, horizontally oriented apertures allow access to the enclosure to black birds and thrushes. The shape and orientation of these larger apertures is chosen to suit the anatomy of the birds which are to be allowed access therethrough.

In use, the enclosure (10) is secured to the ground by any suitable means, such as inverted U shaped pegs or spikes and eyelets (not shown) may be provided around the bottom, as part of the frame, to facilitate this.

Food for the birds allowed access is placed in the enclosure (10) in one or more trays (18) on the ground or in feeders (19) suspended from the top panel. Access to the enclosure is prevented to all larger birds, particularly raptors, and to other predators, such as cats and squirrels.

The enclosure (10) should be positioned in a clear open space, away from vegetation so that birds using the enclosure as a feeding sanctuary will have good all round visibility, and predators will not be able to approach unseen. In this respect, predators, such as cats, would be likely to exploit any adjacent plant cover. In practice, birds using the sanctuary leave as soon as any movement occurs in the vicinity, but have plenty of time to escape so long as the enclosure is well separated from any means of cover.

The enclosure (10) may be provided with a base, with a hatch or door and with a weatherproof cover, such as a plastics sheet, none of which are illustrated. It may also be provided with spikes (not shown) to deter climbing predators.

Similar versions of the enclosure to the embodiment shown in Figure 1 may be suspended, in which case a base will always be provided. Once again it is important that such an enclosure should hang free, as far as possible away from any branch or wall which could aid the close approach of predators.

Other embodiments may be used for aquatic creatures or fish and may be secured underwater or partially so.

The larger size mesh apertures may in other embodiments be formed in different ways and may be of a different shape or relative size.

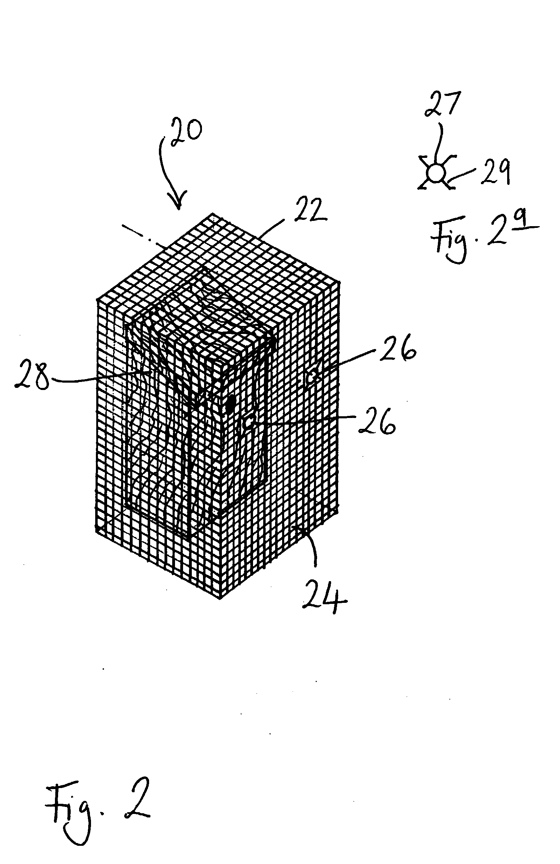

Referring to Figure 2, a second embodiment of enclosure (20) also comprises a frame (22) mounting three rectangular side panels, a top panel and a bottom panel, all formed of wire mesh (24) having square apertures. A suitable aperture size in this case is 25mm x 25mm, i.e a quarter the size of the apertures in the first embodiment of Figure 1. Access via this mesh gauge is not possible for even the smallest of UK wild birds, eg wrens. However, at two places, some of the mesh is cut away, and larger substantially circular apertures (26) are formed. The size of each circular aperture is carefully chosen to allow access only to particular species, e.g a diameter of 29mm allows access to blue tits, a diameter of 32mm allows access to house sparrows, great tits and nuthatches, whereas a diameter of 60mm is required for access by woodpeckers.

The substantially circular apertures (26) may be positioned anywhere suitable in the mesh enclosure. They may be formed by mounting a wire ring (27) into a larger square aperture provided in the mesh (24), by means of four arms (29), as shown in Figure 2a. Alternatively, a small metal plate (not shown) with a substantially circular aperture punched out from its centre may be mounted into a larger mesh aperture.

One of the side panels is omitted so that in use the enclosure (20) can be fitted over the front of a nesting box (28) to prevent access thereto to all birds and other predators too large to pass through the apertures (26).

In this respect, an unprotected nest box can be robbed by larger birds, as well as other predators. Even though the size of an entry hole to a nest box is chosen to allow full access only to certain small species, larger species such as starlings, woodpeckers or jays can put their heads inside and remove the contents. It is for this reason that the additional protection of the enclosure of the invention is important. Larger birds cannot then enter the enclosure and reach the nest box entry hole.

Again, in other embodiments the precise mesh aperture size and shape whereby access to some species is allowed may be varied as required.

## Claims

1. An enclosure providing a feeding or breeding sanctuary for wild life or livestock and comprising at least one wall section formed of mesh, at least two different sizes of aperture being provided in the mesh whereby selected species of wild life or livestock may enter the sanctuary, but species of larger size are excluded.

2. An enclosure as claimed in claim 1 comprising at least one wall section formed of mesh having a majority of apertures of substantially equal size and a few apertures of larger size.

3. An enclosure as claimed in claim 2 wherein the majority of apertures of substantially equal size are substantially square.

4. An enclosure as claimed in claim 2 or 3 wherein the apertures of larger size are approximately twice the size of the majority of apertures.

5. An enclosure as claimed in claim 2, 3 or 4 wherein the apertures of larger size are rectangular and have longer sides arranged substantially horizontally.

6. An enclosure as claimed in claim 2, 3 or 4 wherein the apertures of larger size are substantially circular.

7. An enclosure constructed and arranged for use substantially as hereinbefore described with reference to and as illustrated in Fig. 1 or Fig. 2 of the accompanying drawings.
